Europäisches Patentamt

(19) European Patent Office (11) Publication number: **0 244 910**
**B1**
Office européen des brevets

(12) **EUROPEAN PATENT SPECIFICATION**

(45) Date of publication of the patent specification: (51) Int. Cl.⁴: **C22B 7/02**
03.05.89

(21) Application number: **87200811.5**

(22) Date of filing: **04.05.87**

(54) Separation of non-ferrous metals from iron-containing powdery material.

(30) Priority: **06.05.86 NL 8601147**

(43) Date of publication of application:
**11.11.87 Bulletin 87/46**

(45) Publication of the grant of the patent:
**03.05.89 Bulletin 89/18**

(84) Designated Contracting States:
**BE DE FR GB NL**

(56) References cited:
**EP-A- 0 021 809**
**EP-A- 0 021 922**
**EP-A- 0 040 870**
**EP-A- 0 094 114**
**DE-C- 307 085**
**US-A- 3 375 069**
**US-A- 3 981 962**
**US-A- 4 410 496**
**US-A- 4 435 368**
**US-A- 4 572 771**

**HYDROMETALLURGY, vol. 14, no. 1, May 1985,
pages 93-103, Elsevier Science Publishers B.V.,
Amsterdam, NL; C. NUNEZ et al.: "Recovery of copper,
silver and zinc from huelva (Spain) copper smelter flue
dust by a chloride leach process"**

(73) Proprietor: **HOOGOVENS GROEP B.V., P.O. Box 10.000,
NL-1970 CA IJmuiden(NL)**

(72) Inventor: **Geutskens, Rudolph, Henry Dunantsingel 134,
NL-1902 ED Castricum(NL)**

(74) Representative: **Zuidema, Bert, Ir. et al, p/a
HOOGOVENS IJMUIDEN B.V. P.O. Box 10.000,
NL-1970 CA IJmuiden(NL)**

(56) References cited: (continuation)
**PATENT ABSTRACTS OF JAPAN, vol. 8,
no. 34 (C-210)[1471], 15th February 1984; &
JP-A-58 197 234 (HITACHI SEISAKUSHO
K.K.) 16-11-1983**

ACTORUM AG

**Description**

This invention relates to a method for the separation of non-ferrous materials including at least one of Zn and Pb from a powdery or particulate material containing Fe, for example from the Zn- and Pb-rich fraction of blast furnace dust resulting from hydrocyclone processing. The aim in that case for example is to form a low Zn and Pb fraction of blast furnace dust which can be used again in a blast furnace process and to form a material containing Zn and Pb which can be subjected to further separation to provide raw material for the zinc and/or lead industry.

EP-A 94 114 describes a method for the separation of blast furnace dust using hydrocyclones, in which before hydrocycloning the coarsest components are first removed by dry separation, and then by hydrocycloning of blast furnace gas dust caught by wet gas washing, separation is effected between a fraction which is rich in particular in zinc and lead and a fraction which is poor in these metals. The poor fraction is then used again in the blast furnace process, while the fraction rich in zinc and/or lead is lixiviated or leached with hydrochloric acid.

It has been found that known methods for processing the overflow fraction rich in zinc and lead cause problems. These problems relate partly to the high costs of the known processes, but to a greater extent still the efficiency of the processing of residues. It has been found that there is a need for a method in which with a high yield and with only a small quantity of residues harmful to the environment further separation can be achieved, into fractions which can be used completely in either the blast furnace process, or in existing installations for processing raw materials into zinc and lead. It should be mentioned that when processing iron-containing powdery material which comes from the overflow of a hydrocyclone, the grain analysis as a rule shows only granular material with grain sizes of less than 0.02 mm, in which often around 80% of the material has a dimension of less than 0.01 mm. This material can still consist of more than 30% iron, but can nevertheless still not be used in a blast furnace as it can still contain up to about 12% zinc and about 3% lead.

Examples of processes proposed for separation of non-ferrous metals from iron-containing material are given in US-A 3 375 069 and US-A 4 410 496. In US-A 3 375 069, the process involves mixing of furnace flue dust with spent metal pickling liquor and heating at 66–121°C (150–250°F) preferably 80–107°C (175–225°F) under preferably atmospheric pressure, at a pH which is at least about 1 and preferably 4.5–5. This single step process occupies less than 1 hour and is followed by passing the product to a thickener and then to a filter. Zn particularly is described as dissolved and removed from the iron.

US-A 4 410 496 describes a process primarily for recovery of metals from complex sulphides e.g. smelter flue dusts, involving forming a slurry of the dust using a solution of $CaCl_2$ or $BaCl_2$, and heating the slurry at 80–150°C (preferably about 110°C) in an oxygen atmosphere of about 140–2100 kPa (20–300 psig) for a period of 1–24 hours, for example 20 hours. After this one-stage treatment process, the product is cooled and filtered. Cu, Pb and Zn are described as dissolved and removed.

Adequate separation of Zn and Pb is not thought to be achieved by these processes. It is important for example when treating blast furnace dust, that the product fed back to the blast furnace contains less Zn and Pb than the feed material to the blast furnace, in order to avoid the danger of progressive enrichment of the blast furnace with Zn and Pb.

The object of the invention is to achieve better separation of Zn and/or Pb from iron than occurs in prior art processes, preferably at high yield, and thereby for example to produce a material which is poor in Zn and Pb and can be fed back to a blast furnace. It is also desired to make possible easy recovery of the Zn and Pb with good yield.

The method of the invention involves two heat treatment steps. In the first, substantial oxidation of Fe takes place, typically to $Fe_2O_3$. In the second, the material is treated with HCl which, at the conditions specified, does not dissolve $Fe_2O_3$. The first step thus prevents formation of $FeCl_2$ in the second. The insoluble iron-containing material is then filtered off without substantial cooling, since cooling will cause precipitation of other metals especially Pb as $PbCl_2$. After filtration, cooling can be used to precipitate $PbCl_2$, which may be highly pure, and treatment with alkali precipitates Zn.

The invention sets precise limits to various process parameters, so that the desired results are obtained.

Generally, the method of the invention for the separation of non-ferrous metals including Zn and/or Pb from a powdery or particulate material containing Fe, comprises the steps of

(a) subjecting an aqueous slurry of said material or a mixture of said material and water to mechanical agitation under an $O_2$ atmosphere at a pressure in the range $8 \times 10^5$ to $12 \times 10^5$ Pa (8 to 12 kg/cm²) and at a temperature of at least 110°C, and then

(b) adding an HCl-containing reagent and treating with HCl at a pH in the range 2.6 to 3 under an $O_2$ atmosphere at a pressure in the range $8 \times 10^5$ to $12 \times 10^5$ Pa (8 to 12 kg/cm²) and at a temperature of at least 110°C, for a period of at least 30 minutes. Thereafter the product of step (b) is filtered while it is still hot to separate the solid material which contains Fe largely or substantially free from at least Zn and Pb, while the filtrate largely contains the Zn and/or Pb present in the starting material, e.g. 75 or even 90% of the Zn or Pb in the starting material.

Preferably the temperatures of steps (a) and (b) are each in the range 110 to 130°C. Preferably the said period of step (a) can be shorter; indeed the heating time up to the temperature desired for step (b) may be sufficient to achieve adequate oxidation of the iron to $Fe_2O_3$.

Desirably the filtering is performed while the material is at a temperature of at least 90°C, while preferably the pH in step (b) is in the range 2.7 to 2.9.

In the following the method in accordance with the invention will be largely described and illustrated by reference to the processing of an overflow fraction produced by hydrocycloning of fine blast furnace dust. Nonetheless, the method can also be used for example for zinc and/or lead-rich iron-containing particulate or powdery materials which are obtained by other means such as dust obtained by secondary dust removal in steel works, electric furnace dust from electric steel works or even particles or pieces such as shredded galvanized steel scrap. In addition, it should be pointed out that the method can also be applied to iron-containing powdery material in which further residues are present, such as calcium, carbon, copper, silicon, aluminium and magnesium.

By the invention it is now possible to achieve a further separation e.g. after hydrocycloning of blast furnace gas, by which there is obtained a material consisting largely of iron-oxide and carbon with a negligible amount of zinc and lead residues, in addition to other fractions which are sufficiently enriched with zinc and lead such that they can be used without great difficulty as a raw material for the zinc industry or the lead industry. After filtration a filter cake is obtained which has an acceptably low level of zinc and lead for use in the blast furnace process.

The remaining filtrate is preferably then cooled and material crystallising out during cooling is separated as a Pb-containing product while the filtrate remaining is treated with an alkali, such as an alkali metal or alkaline earth metal hydroxide, after which the remaining deposit is separated as a raw material for the zinc industry.

On cooling the filtrate from the hot filtration it is found that for example about 90% of the lead can deposit in the form of $PbCl_2$ crystals of such purity that direct deposit as a product is possible. By processing the remaining fluid with for example $Ca(OH)_2$ or NaOH a further precipitate is obtained with consists of a mixture which is largely zinc, and has further small contents of lead and iron. The zinc content can amount here to 30 wt.%. This material obtained can be readily used as a raw material in rotary drum furnaces for the zinc industry.

It has been found for example that with the new method up to about 98% of the zinc present in the raw material can be separated and regenerated into zinc, while this is possible up to about 90% for lead. Just under 97% of the iron still present in the raw material can in this way be returned to the blast furnace process.

It has been found that the method of the invention works particularly well when 80 wt.% of the powdery material has a grain size of below 0.01 mm, if an HCl containing reagent is used with an HCl concentration of at least 30%, and preferably about 36%. Where the hydrocycloning is used for a different separation of fractions, in which coarser grains get into the overflow fraction, this leads to an extension of the treatment time necessary, and vice versa.

Preferably the method of the invention is carried out in an autoclave, such that the slurry with a dry matter concentration of between 5 and 15% is fed into an autoclave fitted with an agitator, which then heats the slurry to between 110 and 130°C, and the pressure in the autoclave is then increased to $9.8 \times 10^5$ Pa (10 kg/cm²) by adding pure oxygen, after which HCl of a concentration of about 36% is added. Finally the autoclave is emptied under the gas pressure present over a filter press.

Although it is feasible to let the process run at higher temperatures, this does in practice seem to lead to problems because of the increasing water vapour pressure in the system, as a result of which it is difficult to add the oxygen needed for the oxidation of iron.

Although it is necessary to homogenise the slurry sufficiently for the reaction to take place, this nevertheless seems to be possible with a simple agitator. The agitator does not have to be driven at very high speeds for this.

If when using only hydrocyclones for processing blast furnace flue dust up to about 30% of the total solid matter processed can no longer be used in the blast furnace process, it has been found that when using the method of the invention almost 100% of the solid matter can be recirculated, largely in the blast furnace process and for the rest in the lead and zinc industry. The remaining filtrate can be discharged to salt surface water and thereby forms hardly any burden to the environment.

The method of the invention can even be used for solving a waste problem in pickling shops for metals. The waste pickling acid produced there, where this is based on HCl, can be enriched with concentrated HCl, after which this waste pickling acid can be used as an HCl-containing reagent in the method of the invention. Iron, zinc and lead present in this pickling acid can also be regenerated. The costs of the lixiviation or leaching process can be reduced considerably using waste pickling acid.

The following Examples are not limitative.

Example 1

In a laboratory autoclave with an agitator which can be adjusted at between 200 and 1000 rpm, 4.5 litres of material from the overflow of a hydrocyclone installation for blast furnace flue dust were placed.

EP 0 244 910 B1

This material consisted of 94% water and also a granular mass with a chemical composition and screen analysis in accordance with Tables I and II.

The zinc fraction present in the granular mass was as follows:

zinc sulphide 3 wt.%
zinc ferrite 7 wt.%
zinc silicate 20 wt.%
zinc oxide 70 wt.%

### Table I

(Composition dry matter raw material)

|       | Zn   | Pb   | Fe   | $Al_2O_3$ | $SiO_2$ | CaO | MgO | C    | MnO | Other |
|-------|------|------|------|-----------|---------|-----|-----|------|-----|-------|
| wt.%  | 7.85 | 1.52 | 21.6 | 4.7       | 11.9    | 3.6 | 1.8 | 27.0 | 0.2 | 19.83 |

### Table II

(Screen analysis dry matter raw material)

|       | 60 μ | 30–60 μ | 20–30 μ | 9–20 μ | 6–9 μ | 6 μ  |
|-------|------|---------|---------|--------|-------|------|
| wt.%  | 2.1  | 2.9     | 2.8     | 9.8    | 9.2   | 74.3 |

The mixture is agitated under an $O_2$ atmosphere at a temperature of 112°C and a pressure of about $10^3$ kPa (10.2 kg/cm²). The mixture was then treated for 45 min with a 36% HCl solution in a quantity of 614 ml per kg dry matter in the autoclave under the same conditions of temperature, pressure and $O_2$ atmosphere. The pH was maintained at 3 by addition of HCl as needed. Then the autoclave contents were passed without cooling significantly to a filter press and the solid matter present compressed into a filter cake with a solid concentration of about 50 wt.%.

The dry matter in this filter cake contained _inter alia_ the following components, as a result of which it is suitable for re-use in the blast furnace process:

|       | Fe   | Zn | Pb  | Ca  | Mg  | Al  | Si  | C    |
|-------|------|----|-----|-----|-----|-----|-----|------|
| wt.%  | 25.0 | 1  | 0.6 | 0.4 | 0.6 | 1.1 | 1.2 | 31.0 |

The filtrate of this filtration is cooled to ambient temperature, whereby 98% pure $PbCl_2$ is separated in crystal form. The needle-shaped crystals thus formed with dimensions of approximately 0.2 and 2 millimetres, form a suitable product for further processing, for example in the lead industry. By treating with NaOH, the Zn present in the remaining filtrate are precipitated.

It has been calculated from the quantities of Zn and Pb present in the raw material, that 89 wt.% of Zn and 67 wt.% of Pb could be recovered.

### Example II

In a laboratory autoclave which was the same as that used in Example I 4.5 litres of material from the overflow of a hydrocyclone installation for blast furnace flue dust was placed. This material consisted of 94% water and a granular mass with a chemical composition and screen analysis in accordance with Tables III and IV.

The zinc fraction present in the granular mass was as in Example I.

### Table III

(Composition dry matter raw material)

|       | Zn  | Pb  | Fe   | $Al_2O_3$ | $SiO_2$ | CaO | MgO | C    | MnO |
|-------|-----|-----|------|-----------|---------|-----|-----|------|-----|
| wt.%  | 8.2 | 2.5 | 22.2 | 5.9       | 9.6     | 3.4 | 1.5 | 30.0 | 0.3 |

The remainder is other material.

### Table IV

(Screen analysis dry matter raw material)

|       | 60 μ | 30–60 μ | 20–30 μ | 9–20 μ | 6–9 μ | 6 μ  |
|-------|------|---------|---------|--------|-------|------|
| wt.%  | 2.1  | 2.9     | 2.8     | 9.8    | 9.2   | 74.3 |

4

The mixture is agitated under an $O_2$ atmosphere of 112°C and a pressure of $10^3$ kPa (10.0 kg/cm²). The mixture is then treated for 50 min. with an HCl solution in a quantity of 1360 ml per kg dry matter in the autoclave. As the HCl solution, a spent pickling solution containing HCl and $FeCl_2$ of 18% by weight was used. The pH in the autoclave was about 2.8, maintained as necessary by further supply of HCl. The temperature, atmosphere and pressure were the same after addition of HCl as before. Then the autoclave content was passed without cooling to a filter press and the solid matter present compressed into a filter cake with a solid concentration of about 50 wt.%.

The dry matter in this filter cake contained *inter alia* the following components:

|  | Fe | Zn | Pb | Ca | Mg | Al | Si |
|---|---|---|---|---|---|---|---|
| wt.% | 33.9 | 0.16 | 0.22 | 0.5 | 0.8 | 4.6 | 6.4 |

As in Example I, the filtrate of this filtration is cooled to ambient temperature, whereby 98% pure $PbCl_2$ was separated in crystal form. The needle-shaped crystals formed with dimensions of approximately 0.2 and 2 millimetres, form a suitable product for further processing, for example in the lead industry. By treating with NaOH, the Zn present in the remaining filtrate are precipitated.

Of the quantities of Zn and Pb present in the raw material, 98.4 wt.% of Zn and 93.0 wt.% of Zn were recovered.

## Claims

1. Method for the separation of non-ferrous metals including Zn and/or Pb from a powdery or particulate material containing Fe, comprising the steps of
    (a) subjecting an aqueous slurry of said material or a mixture of said material and water to mechanical agitation under an $O_2$ atmosphere at a pressure in the range $8 \times 10^5$ to $12 \times 10^5$ Pa and at a temperature of at least 110°C,
    (b) adding an HCl-containing reagent to the product of step (a) and treating the product with HCl at a pH in the range 2.6 to 3 under an $O_2$ atmosphere at a pressure in the range $8 \times 10^5$ to $12 \times 10^5$ Pa and at a temperature of at least 110°C, for a period of at least 30 min, and
    (c) filtering the product of step (b) while it is still hot to separate the solid material which contains Fe largely free from at least Zn and Pb, while the filtrate largely contains the Zn and/or Pb present in the starting material.

2. Method according to claim 1 wherein the temperatures of steps (a) and (b) are each in the range 110 to 130°C.

3. Method according to claim 1 or claim 2 wherein the said period of step (b) is in the range 45 to 55 minutes.

4. Method according to any one of claims 1 to 3 wherein the filtering of step (c) is performed while the material is at a temperature of at least 90°C.

5. Method according to any one of claims 1 to 4 wherein the pH in step (b) is in the range 2.7 to 2.9.

6. Method according to any one of claims 1 to 5 wherein the starting material is a slurry of a Zn and Pb-rich fraction of blast furnace dust resulting from a hydrocyclone process.

7. Method according to any one of claims 1 to 6 including after step (c) the further steps of (d) cooling the filtrate, (e) separating material crystallized out in the cooling and (f) treating the remaining filtrate with alkali so as to precipitate a Zn-containing solid.

8. Method according to any one of claims 1 to 7 wherein the said slurry or slurry-like mixture used in step (a) contains between 5 and 15% of dry matter.

9. Method according to any one of claims 1 to 8 wherein in step (b) there is used as the HCl-containing reagent waste pickling acid from a metal pickling process.

## Patentansprüche

1. Verfahren zur Abtrennung von Nichteisenmetallen einschließlich Zn und/oder Pb aus einem pulverförmigen oder teilchenförmigen eisenhaltigen Material, umfassend die Schritte
    (a) wäßrige Aufschlämmung des Materials oder Mischung des Materials und Wasser unter $O_2$-Atmosphäre bei einem Druck im Bereich von $8 \times 10^5$ bis $12 \times 10^5$ bei einer Temperatur von zumindest 110°C mechanischem Rühren unterwerfen,
    (b) dem Produkt des Schrittes (a) ein HCl-haltiges Reagens zusetzen und das Produkt mit HCl bei einem pH im Bereich von 2,6 bis 3 unter $O_2$-Atmosphäre bei einem Druck im Bereich von $8 \times 10^5$ bis $12 \times 10^5$ Pa und bei einer Temperatur von zumindest 110°C für eine Zeitdauer von zumindest 30 Minuten behandeln und
    (c) das Produkt von Schritt (b) filtrieren, während es noch heiß ist, um das feste Material, das Eisen weitgehend frei von zumindest Zn und Pb enthält, abzutrennen, während das Filtrat weitgehend das Zn und/oder Pb enthält, das im Ausgangsmaterial anwesend war.

2. Verfahren nach Anspruch 1, in dem die Temperaturen der Schritte (a) und (b) beide im Bereich von 110 bis 130°C liegen.

3. Verfahren nach Anspruch 1 oder 2, in dem die Zeitperiode im Schritt (b) im Bereich von 45 bis 55 Minuten liegt.

4. Verfahren nach einem der Ansprüche 1 bis 3, in dem das Filtrieren von Schritt (c) durchgeführt wird, während das Material eine Temperatur von zumindest 90°C hat.

5. Verfahren nach einem der Ansprüche 1 bis 4, in dem der pH-Wert im Schritt (b) im Bereich von 2,7 bis 2,9 liegt.

6. Verfahren nach einem der Ansprüche 1 bis 5, in dem das Ausgangsmaterial eine Aufschlämmung einer Zn- und Pb-reichen Fraktion von Gichtstaub aus einem Hydrozyklonverfahren ist.

7. Verfahren nach einem der Ansprüche 1 bis 6, nach dem Schritt (c) die weiteren Schritte (d) Kühlen des Filtrats, (e) Abtrennen von beim Kühlen auskristallisierendem Material und (f) Behandeln des verbleibenden Filtrats mit Alkali, um einen Zn-haltigen Feststoff auszufällen, einschließend.

8. Verfahren nach einem der Ansprüche 1 bis 7, in dem die Aufschlämmung oder aufschlämmungsähnliche Mischung, die im Schritt (a) eingesetzt wird, zwischen 5 und 15% Trockensubstanz enthält.

9. Verfahren nach einem der Ansprüche 1 bis 8, in dem im Schritt (b) als HCl-haltiges Reagens Beizablauge aus einem Metallbeizverfahren verwendet wird.

**Revendications**

1. Procédé de séparation de métaux non-ferreux, comprenant Zn et/ou Pb, à partir d'un matériau pulvérulent ou en particules contenant Fe, comportant les étapes suivantes:

(a) soumettre une suspension aqueuse dudit matériau, ou un mélange dudit matériau et d'eau, à une agitation mécanique sous une atmosphère de $O_2$, à une pression comprise entre $8 \times 10^5$ et $12 \times 10^5$ Pa, et à une température d'au moins 110°C;

(b) ajouter un réactif contenant HCl au produit de l'étape (a), et traiter le produit avec HCl à un pH compris entre 2,6 et 3 sous une atmosphère de $O_2$, à une pression comprise entre $8 \times 10^5$ et $12 \times 10^5$ Pa, et à une température d'au moins 110°C, pendant une période d'au moins 30 minutes; et

(c) filtrer le produit de l'étape (b) pendant qu'il est encore chaud, afin de séparer le matériau solide contenant Fe et très pauvre au moins en Zn et Pb, alors que le filtrat est très riche en Zn et/ou Pb présents dans le matériau de départ.

2. Procédé selon la revendication 1, dans lequel les températures des étapes (a) et (b) sont chacune comprises entre 110 et 130°C.

3. Procédé selon les revendications 1 ou 2, dans lequel ladite période de temps de l'étape (b) est comprise entre 45 et 55 minutes.

4. Procédé selon l'une quelconque des revendications 1 à 3, dans lequel la filtration dans l'étape (c) est réalisée lorsque le matériau est à une température d'au moins 90°C.

5. Procédé selon l'une quelconque des revendications 1 à 4, dans lequel le pH dans l'étape (b) est compris entre 2,7 et 2,9.

6. Procédé selon l'une quelconque des revendications 1 à 5, dans lequel le matériau de départ est une suspension d'une fraction riche en Zn et Pb de poussière de haut-fourneau et provenant d'un hydrocyclone.

7. Procédé selon l'une quelconque des revendications 1 à 6, comportant après l'étape (c) les étapes suivantes: (d) refroidir le filtrat; (e) séparer la matériau cristallisé du fait du refroidissement; et (f) traiter le filtrat résiduel avec de l'alcali, de façon à précipiter un solide contenant Zn.

8. Procédé selon l'une quelconque des revendications 1 à 7, dans lequel ladite suspension ou le mélange analogue à une suspension utilisé dans l'étape (a) contient entre 5 et 15% de matières sèches.

9. Procédé selon l'une quelconque des revendications 1 à 8, dans l'étape (b) duquel on utilise comme réactif contenant HCl de l'acide de décapage de déchets en provenance d'un procédé de décapage de métaux.